# EUROPÄISCHE PATENTSCHRIFT

(11) **EP 0 860 971 B1**
(45) Veröffentlichungstag und Bekanntmachung des Hinweises auf die Patenterteilung: **27.07.2016**
(21) Anmeldenummer: 97119872.6
(22) Anmeldetag: 13.11.1997
(51) Int. Cl.: H04M 1/725, H04M 1/65

(54) **FUNKGERÄT**
RADIOTELEPHONE
RADIOTÉLÉPHONE

(30) Priorität: 20.02.1997 DE 19706596
(43) Veröffentlichungstag der Anmeldung: 26.08.1998
(73) Patentinhaber: IPCom GmbH & Co. KG, 82049 Pullach (DE)
(72) Erfinder: Moeller, Stephan, 30519 Hannover (DE); Murgas, Hans, 61462 Koenigstein (DE)
(74) Vertreter: Molnia, David

(56) Entgegenhaltungen:
- EP-A- 0 693 860
- EP-A- 0 755 126

## Beschreibung

### Stand der Technik

Die Erfindung geht von einem Funkgerät nach der Gattung des Hauptanspruchs aus.

Als Mobiltelefon ausgebildete Funkgeräte mit einer Anzeigevorrichtung und einer alphanumerischen Tastatur sind bereits bekannt.

Die EP-A 693 860 zeigt ein Funkgerät, in welchem in einem Speicher vorgegebene Textbausteine gespeichert sind, die durch den Benutzer des Funkgeräts absendbar sind. Diese vorbestimmten Textbausteine weisen Platzhalter auf, welche es dem Benutzer erlauben, eine dieser vorbestimmten Textbausteine in engen Grenzen zu aktualisieren. Ferner ist vorgesehen, dass der Benutzer vorgefertigte Nachrichten, insbesondere einzelne Wörter, erstellen und abspeichern kann. Aus den vorgefertigten abgespeicherten Wörtern ist es dem Benutzer möglich, eine Nachricht aufzubauen.

Die EP-A 755126 zeigt ein Funkgerät, bei welchem vorgegebene Nachrichten im Funkgerät abgespeichert sind und vom Benutzer versendet werden können. Auch hier sind Sätze bzw. Satzteile fest abgespeichert, können vom Benutzer aufgerufen und gegebenenfalls durch einen eigenen Text ersetzt werden.

### Vorteile der Erfindung

Das erfindungsgemäße Funkgerät mit den Merkmalen des Hauptanspruchs hat demgegenüber den Vorteil, daß keine Wiederholung der Programmierung von immer wieder abzusendenden inhaltsgleichen Textmitteilungen erforderlich ist, sondern bereits vorprogrammierte Textbausteine aus dem Speicher zur Absendung abrufbar sind. Auf diese Weise wird Zeit eingespart und der Bedienkomfort für den Benutzer erhöht.

Durch die in den Unteransprüchen aufgeführten Maßnahmen sind vorteilhafte Weiterbildungen und Verbesserungen des im Hauptanspruch angegebenen Funkgerätes möglich.

Vorteilhaft ist dabei, daß der mindestens eine Textbaustein durch Eingabe an der Tastatur an der Anzeigevorrichtung zur Anzeige bringbar ist und daß der mindestens eine Textbaustein durch Eingabe an der Tastatur zumindest teilweise änderbar ist. Auf diese Weise hat der Benutzer des Funkgerätes eine Kontrollmöglichkeit über den Inhalt des abzusendenden Textbausteins. Außerdem ist eine Individualisierung vorgegebener Textbausteine und damit eine Anpassung an die Bedürfnisse des Benutzers möglich, so daß der Aufwand an Speicherplatz gering gehalten werden kann.

Vorteilhaft ist auch, daß der mindestens eine Textbaustein Lücken aufweist, in die durch Eingabe an der Tastatur Zeichen einfügbar sind. Auf diese Weise wird dem Benutzer bereits vorgegeben, an welchen Stellen der Textbaustein änderbar ist. Eine individuelle Anpassung des Textbausteins an die Bedürfnisse des Benutzers kann somit schneller und zielgerichteter erfolgen.

Vorteilhaft ist weiterhin, daß die Lücken des Textbausteins durch vorzugsweise blinkende Sonderzeichen, insbesondere Gedankenstriche, an der Anzeigevorrichtung darstellbar sind. Auf diese Weise wird der Benutzer noch schneller und zielgerichteter auf die änderbaren Stellen des Textbausteins hingewiesen, so daß der Bedienkomfort weiter erhöht wird.

Vorteilhaft ist weiterhin, daß der mindestens eine Textbaustein durch Eingabe an der Tastatur vorgebbar ist und durch eine weitere Tastaturbetätigung im Speicher ablegbar ist. Auf diese Weise können auch völlig an die Bedürfnisse des Benutzers angepaßte Textbausteine im Speicher abgelegt werden, so daß sie bei wiederholter Aussendung nicht ständig neu programmiert werden müssen, wodurch Aufwand und Zeit eingespart werden.

Vorteilhaft ist weiterhin, daß bei der Vorgabe des mindestens einen Textbausteins mittels der Tastatur auch Leerzeichen eingebbar sind, die beim Aufruf des mindestens einen Textbausteins als vorzugsweise blinkende Sonderzeichen, insbesondere Gedankenstriche, an der Anzeigevorrichtung darstellbar sind. Auf diese Weise wird der Bedienkomfort weiter erhöht, da auch individuell vom Benutzer vorgegebene Textbausteine bei häufiger Verwendung mit geringfügigen Änderungen nicht separat abgespeichert werden müssen, sondern mit Platzhaltern eine schnelle Anpassung an die jeweiligen Gegebenheiten ermöglichen, wobei zudem Speicherplatz gespart wird.

### Zeichnung

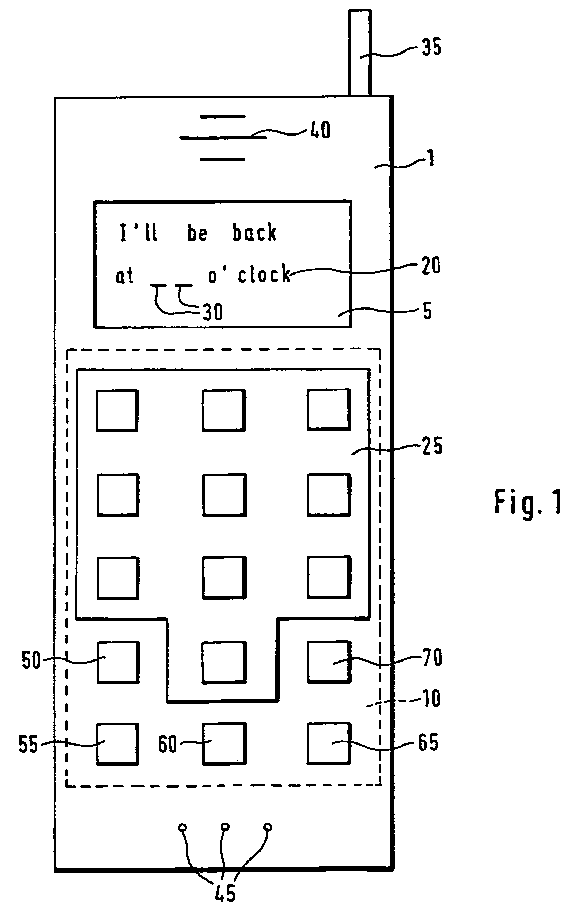

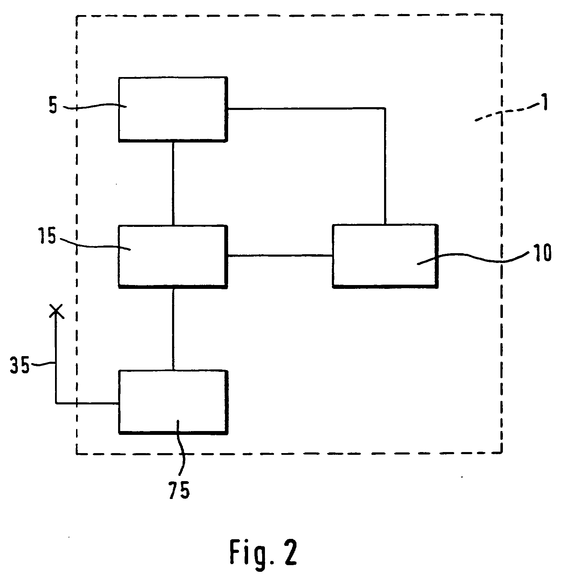

Ein Ausführungsbeispiel der Erfindung ist in der Zeichnung dargestellt und in der nachfolgenden Beschreibung näher erläutert. Es zeigen Figur 1 ein erfindungsgemäßes Funkgerät mit Anzeigevorrichtung und Tastatur und Figur 2 ein Blockschaltbild des erfindungsgemäßen Funkgerätes.

### Beschreibung des Ausführungsbeispieles

In Figur 1 kennzeichnet 1 ein als Mobiltelefon ausgebildetes Funkgerät mit einer Sende-/Empfangsantenne 35, einem Lautsprecher 40, einer Anzeigevorrichtung 5, einer alphanumerischen Tastatur 10 und einem Mikrophon 45. Die Anzeigevorrichtung 5 kann beispielsweise als Flüssigkristallanzeige ausgebildet sein. Die alphanumerische Tastatur 10 umfaßt eine 10er-Tastatur 25, deren Tasten jeweils eine Ziffer und mehrere Buchstaben oder Sonderzeichen zugeordnet sind. Eine Umschaltung zwischen Ziffern- und Buchstaben- bzw. Sonderzeicheneingabe an der 10er-Tastatur 25 kann beispielsweise durch Betätigung einer ersten Sondertaste 50 der Tastatur 10 erfolgen. Die Auswahl eines von mehreren einer Taste der 10er-Tastatur 25 zugeordneten Buchstaben oder Sonderzeichen kann beispielsweise durch unterschiedlich lange Betätigung der entsprechenden Taste der 10er-Tastatur 25 bewirkt werden. Die erste Sondertaste 50 befindet sich außerhalb der 10er-Tastatur 25. Dasselbe gilt für eine zweite Sondertaste 55 der Tastatur 10, die zum Ein- und Ausschalten des Mobiltelefons 1 dient. Mittels einer dritten ebenfalls außerhalb der 10er-Tastatur 25 angeordneten Sondertaste 60 der Tastatur 10 kann zwischen verschiedenen Betriebsmodi des Mobiltelefons 1 umgeschaltet werden. Auf diese Weise ist auch ein Betriebsmodus einstellbar, bei dem mittels der 10er-Tastatur 25 eingegebene und an der Anzeigevorrichtung 5 dargestellte Texte an einen Teilnehmer des Mobilfunknetzes mittels der Sende-/Empfangsantenne 35 abgesendet werden können. Auf diese Weise ist ein Mobilfunkteilnehmer auch dann erreichbar, wenn er sein Mobiltelefon gerade nicht eingeschaltet hat oder den Tonruf überhört hat. Der gesendete Text wird im Mobilfunknetz zwischengespeichert, wobei die abgesendete Nachricht bei Wiedereinschalten des Mobiltelefons des gerufenen Teilnehmers optisch an dessen Anzeigevorrichtung dargestellt und gegebenenfalls akustisch angekündigt wird. Der Benutzer des Mobiltelefons 1 hat dabei die Möglichkeit einen abzusendenden Text selbst vollständig über die 10er-Tastatur 25 einzugeben, wobei der eingegebene Text an der Anzeigevorrichtung 5 zur Kontrolle wiedergegeben wird. Nach Anwahl des zu rufenden Teilnehmers mittels der 10er-Tastatur 25 und erfolgreichem Verbindungsaufbau wird die eingegebene Textnachricht dann an den gerufenen Teilnehmer abgesendet, bzw. wie oben beschrieben zunächst im Mobilfunknetz zwischengespeichert.

Gemäß Figur 2 ist ein Blockschaltbild des erfindungsgemäßen Mobiltelefons 1 dargestellt. Dabei sind nur die für die Erfindung relevanten Blöcke dargestellt. Das Mobiltelefon 1 umfaßt dabei die Anzeigevorrichtung 5 und die Tastatur 10, die miteinander verbunden sind. An die Anzeigevorrichtung 5 und die Tastatur 10 ist ein Speicher 15 angeschlossen. Der Speicher 15 ist über einen Sende-/Empfangsbaustein 75 mit der Sende-/Empfangsantenne 35 verbunden.

Mittels einer vierten außerhalb der 10er-Tastatur 25 angeordneten Sondertaste 65 der Tastatur 10 kann der Benutzer im Betriebsmodus zur Erstellung einer auszusendenden Textnachricht im Speicher 15 gespeicherte Textbausteine nacheinander aufrufen, wobei diese Textbausteine zur Kontrolle jeweils an der Anzeigevorrichtung 5 dargestellt werden. Ein an der Anzeigevorrichtung 5 auf diese Weise dargestellter Textbaustein aus dem Speicher 15 kann dann in der beschriebenen Weise nach Anwahl eines zu rufenden Teilnehmers des Mobilfunknetzes mittels der 10er-Tastatur 25 an diesen Teilnehmer abgesendet oder zunächst wie beschrieben im Mobilfunknetz zwischengespeichert werden. Gemäß Figur 1 ist ein solcher Textbaustein an der Anzeigevorrichtung 5 dargestellt und mit dem Bezugszeichen 20 gekennzeichnet. Dabei ist es von Vorteil, solche Textbausteine 20 im Speicher 15 abzuspeichern, die häufig verwendet werden, um dem Benutzer zeitaufwendige Texteingaben zu ersparen. Solche Texte können für die Ankündigung von Terminverschiebungen, Verspätungen, Glückwünschen, der Angabe des Zeitpunktes der Wiedererreichbarkeit oder dergleichen besonders sinnvoll sein, da sie häufig vorkommen. Um eine Flexibilität beispielsweise bei Zeitangaben zu erreichen, besteht die Möglichkeit, innerhalb der Textbausteine 20 Leerzeichen vorzusehen, die dem Benutzer anzeigen, daß er an diesen Stellen die ansonsten fest vorgegebene Textnachricht individuell an seine Bedürfnisse anpassen kann. Eine besondere Kennzeichnung dieser Leerzeichen kann beispielsweise durch blinkende Sonderzeichen 30 gemäß Figur 1 erfolgen, wobei in Figur 1 zwei Leerzeichen durch jeweils einen Gedankenstrich an der Anzeigevorrichtung 5 dargestellt sind. So ist in Figur 1 an der Anzeigevorrichtung 5 als Beispiel der folgende Textbaustein 20 angegeben: "I'll be back at__o'clock". An der Stelle der beiden Sonderzeichen 30 kann der Benutzer dann eine maximal zweistellige Zahl zur Kennzeichnung des Zeitpunkts seiner Rückkehr an der 10er-Tastatur 25 eingeben.

Zusätzlich zu fest vorgegebenen, zumindest teilweise an den Stellen der Sonderzeichen 30 änderbaren Textbausteinen 20, die in einem ROM des Speichers 15 abgelegt sein können, besteht auch die Möglichkeit, daß der Benutzer über die 10er-Tastatur 25 selbst Textbausteine 20 im Betriebsmodus der Erstellung und Absendung von Textnachrichten eingibt und diese durch Betätigung einer fünften, außerhalb der 10er-Tastatur 25 befindlichen Sondertaste 70 der Tastatur 10 in einem beschreibbaren Teil, beispielsweise einem RAM des Speichers 15 abspeichert. Über die vierte Sondertaste 65 können dann sowohl fest vorgegebene als auch vom Benutzer abgespeicherte Textbausteine 20 des Speichers 15 aufgerufen und zur Anzeige an der Anzeigevorrichtung 5 gebracht werden. Weiterhin hat der Benutzer auch die Möglichkeit, bei der Vorgabe von Textbausteinen 20 auch Leerzeichen vorzusehen, die bei einem späteren Aufruf aus dem Speicher 15 ebenfalls durch blinkende Sonderzeichen 30 an der Anzeigevorrichtung 5 dargestellt werden und eine entsprechende Änderung des Textbausteins 20 an diesen Stellen ermöglichen. Als Sonderzeichen 30 können auch andere Zeichen verwendet werden, beispielsweise sternförmige Zeichen oder dergleichen.

Die Erfindung ist nicht auf Mobiltelefone beschränkt, sondern auf alle Arten von Funkgeräten, beispielsweise auch für Schnurlostelefone anwendbar.

## Patentansprüche

1. Funkgerät (1), insbesondere für Mobilfunk, mit einer Anzeigevorrichtung (5) und einer alphanumerischen Tastatur (10), wobei ein Speicher (15) vorgesehen ist, in dem mindestens ein fest vorgegebener Textbaustein (20) gespeichert ist und der mindestens eine Textbaustein (20) durch einen Wählvorgang an der Tastatur (10) des Funkgerätes (1) absendbar ist,
- wobei in einem Vorgabemodus der mindestens eine Textbaustein (20) durch Eingabe an der Tastatur (10) vorgebbar und durch eine weitere Tastaturbetätigung im Speicher (15) ablegbar ist, wobei im Vorgabemodus mittels der Tastatur (10) durch Leerzeichen eingebbar ist, an welchen Stellen der Textbaustein in einem Aufrufmodus änderbar ist,
- **dadurch gekennzeichnet, dass** im Aufrufmodus der mindestens eine Textbaustein (20) aufrufbar ist und dabei die Leerzeichen als andere Sonderzeichen (30) an der Anzeigevorrichtung (5) darstellbar sind,
- und dass im Aufrufmodus eine Änderung des im Vorgabemodus vorgegebenen Textbausteins (20) an den Stellen der anderen Sonderzeichen möglich ist.

2. Funkgerät (1) nach Anspruch 1, **dadurch gekennzeichnet, daß** der mindestens eine Textbaustein (20) durch Eingabe an der Tastatur (10) an der Anzeigevorrichtung (5) zur Anzeige bringbar ist und daß der mindestens eine Textbaustein (20) durch Eingabe an der Tastatur (10) zumindest teilweise änderbar ist.

3. Funkgerät (1) nach Anspruch 1 oder 2, **dadurch gekennzeichnet, daß** der mindestens eine Textbaustein (20) Lücken aufweist, in die durch Eingabe an der Tastatur (10) Zeichen einfügbar sind.

4. Funkgerät (1) nach Anspruch 3, **dadurch gekennzeichnet, daß** die Lücken durch vorzugsweise blinkende Sonderzeichen (30), insbesondere Gedankenstriche, an der Anzeigevorrichtung (5) darstellbar sind.

## Claims

1. Radio (1), particularly for mobile radio, having a display apparatus (5) and an alphanumeric keypad (10), wherein a memory (15) is provided that stores at least one firmly prescribed text module (20), and the at least one text module (20) can be sent by a dialling process on the keypad (10) of the radio (1),
- wherein in a prescribe mode, the at least one text module (20) is prescribable by input on the keypad (10) and is storable in the memory (15) by a further keypad operation, wherein in prescribe mode, the keypad (10) can be used to input, by means of blanks, those locations at which the text module is modifiable in a call mode,
- **characterized in that** in call mode, the at least one text module (20) is callable and, in this case, the blanks are representable on the display apparatus (5) as other special characters (30),
- and **in that** in call mode, it is possible for the text module (20) prescribed in prescribe mode to be modified at the locations of the other special characters.

2. Radio (1) according to Claim 1, **characterized in that** the at least one text module (20) is displayable on the display apparatus (5) by input on the keypad (10) and **in that** the at least one text module (20) is at least partially modifiable by input on the keypad (10).

3. Radio (1) according to Claim 1 or 2, **characterized in that** the at least one text module (20) has gaps into which characters are insertable by input on the keypad (10).

4. Radio (1) according to Claim 3, **characterized in that** the gaps are representable on the display apparatus (5) by preferably flashing special characters (30), particularly dashes.

## Revendications

1. Appareil radio (1), notamment destiné à la radio mobile, comportant un dispositif d'affichage (5) et un clavier alphanumérique (10), dans lequel il est prévu une mémoire (15) dans laquelle est stocké au moins un bloc de texte prédéterminé (20) et l'au moins un bloc de texte (20) peut être envoyé par un processus de sélection au clavier (10) de l'appareil radio (1),
- dans lequel, dans un mode prédéfini, l'au moins un bloc de texte (20) peut être prédéfini par une saisie effectuée sur le clavier (10) et peut être stocké dans la mémoire (15) par l'intermédiaire d'un autre actionnement du clavier, dans lequel, dans le mode prédéfini, il est possible d'indiquer au moyen de caractères vides sur le clavier (10) les endroits où le bloc de texte peut être modifié dans un mode d'appel,
- **caractérisé en ce que**, dans le mode d'appel, l'au moins un bloc de texte (20) peut être appelé et les caractères vides peuvent ainsi être représentés sous la forme d'autres caractères spéciaux (30) sur le dispositif d'affichage (5),
- et **en ce que**, dans le mode d'appel, une modification du bloc de texte (20) prédéterminé dans le mode prédéfini est possible aux endroits des autres caractères spéciaux.

2. Appareil radio (1) selon la revendication 1, **caractérisé en ce que** l'au moins un bloc de texte (20) peut être amené à être affiché sur le dispositif d'affichage (5) par une saisie effectuée sur le clavier (10) et **en ce que** l'au moins un bloc de texte (20) peut être modifié au moins partiellement par une saisie effectuée sur le clavier (10).

3. Appareil radio (1) selon la revendication 1 ou 2, **caractérisé en ce que** l'au moins un bloc de texte (20) présente des lacunes dans lesquelles il est possible d'insérer des caractères par une saisie effectuée sur le clavier (10).

4. Appareil radio (1) selon la revendication 3, **caractérisé en ce que** les lacunes peuvent être représentées sur le dispositif d'affichage (5) par des caractères spéciaux (30) qui sont de préférence clignotants, notamment des tirets.
